# EUROPÄISCHE PATENTSCHRIFT

(11) **EP 4 119 349 B1**
(45) Veröffentlichungstag und Bekanntmachung des Hinweises auf die Patenterteilung: **07.08.2024**
(21) Anmeldenummer: 22191837.8
(22) Anmeldetag: 04.06.2020
(51) Int. Cl.: B32B 37/14, B29D 30/38, G06K 19/077

(54) **VERFAHREN ZUR HERSTELLUNG EINES MATERIALSTREIFENS MIT INTEGRIERTEN ELEKTRONISCHEN KOMPONENTEN**
METHOD FOR MANUFACTURING A STRIP OF MATERIAL WITH INTEGRATED ELECTRONIC COMPONENTS
PROCÉDÉ DE FABRICATION D'UNE BANDE DE MATIÈRE AVEC COMPOSANTS ÉLECTRONIQUES INTÉGRÉS

(30) Priorität: 13.06.2019 DE 102019116163
(43) Veröffentlichungstag der Anmeldung: 18.01.2023
(62) Teilanmeldung aus: 20178169.7
(73) Patentinhaber: Texmag GmbH Vertriebsgesellschaft, 8800 Thalwil (CH)
(72) Erfinder: ADAM, Jens-Oliver, 04229 Leipzig (DE)
(74) Vertreter: Peterreins Schley

(56) Entgegenhaltungen:
- KR-A- 20100 082 464
- KR-A- 20100 120 505
- KR-A- 20160 050 452
- US-A1- 2010 212 791

## Beschreibung

Die vorliegende Erfindung betrifft ein Verfahren zur Herstellung eines Materialstreifens mit integrierter elektronischer Komponente. Insbesondere betrifft die vorliegende Erfindung ein Verfahren zur Herstellung eines Gummistreifens mit integriertem RFID-Chip.

### Technischer Hintergrund

Im Stand der Technik ist bekannt, RFID-Chips in Auto- bzw. Lastwagenreifen aus Gründen der Logistik und der Qualitätssicherung zu integrieren, z.B. aus KR 2010/0082464 A, US 2011/0284155 A1, US 2010/0212791 A1, KR 2010/0120505, KR 2016/0050452 A und EP 1 724 127 A2. Dadurch ist es auch möglich, eine Verkehrsüberwachung durchzuführen und gegebenenfalls einen Diebstahl von Reifen bzw. Rädern nachzuweisen.

Es ist ebenfalls bekannt, Materialstreifen aus unvulkanisiertem Gummi mit integriertem RFID-Chip herzustellen, sogenannte RFID-Tags, die dann bei der Reifenherstellung zusammen mit dem Gummi für die Herstellung des Reifens vulkanisiert werden. Für die Herstellung derartiger Materialstreifen mit integriertem RFID-Chip werden zwei getrennte Materialbahnen von einer Rolle abgewickelt, und RFID-Chips werden zwischen diesen zwei Materialbahnen integriert und anschließend laminiert, bevor die Materialbahnen in Materialstreifen bzw. RFID-Tags geschnitten werden.

Es ist die Aufgabe der vorliegenden Erfindung, ein Verfahren zur Herstellung eines Materialstreifens mit integrierter elektronischer Komponente bereitzustellen, mit welchen der Platzbedarf für die Herstellungsanlagen reduziert ist. Diese Aufgabe wird durch ein Verfahren nach Anspruch 1 gelöst. Die abhängigen Ansprüche betreffen vorteilhafte Ausgestaltung der Erfindung.

### Zusammenfassung der Erfindung

Das Verfahren zur Herstellung eines Materialstreifens mit integrierter elektronischer Komponente umfasst nach der vorliegenden Erfindung die folgenden Schritte: Zuführen einer Materialbahn, die zunächst auf einer Rolle aufgewickelt ist und durch eine Zuführvorrichtung abgewickelt wird, Abschneiden eines ersten Materialstückes von der Materialbahn, Abschneiden eines zweiten Materialstückes von derselben Materialbahn, Auflegen einer elektronischen Komponente auf das erste Materialstück oder auf das zweite Materialstück, Auflegen des zweiten Materialstückes auf das erste Materialstück bzw. des ersten Materialstückes auf das zweite Materialstück, so dass die elektronische Komponente zwischen dem ersten Materialstück und dem zweiten Materialstück aufgenommen ist, wobei das erste Materialstück und das zweite Materialstück unvulkanisiertes Gummi aufweisen oder aus unvulkanisiertem Gummi bestehen.

Erfindungsgemäß werden das erste Materialstück und das zweite Materialstück von derselben Materialbahn abgeschnitten. Daher ist nur eine Vorrichtung zur Abwicklung und Zuführung einer einzigen Materialbahn aus unvulkanisiertem Gummi erforderlich. Auf diese Weise erfordert die gesamte Herstellungsanlage deutlich weniger Platz, da eine Vorrichtung zur Abwicklung einer zweiten Materialbahn aus unvulkanisiertem Gummi entfallen kann. Außerdem ist der Arbeitsablauf vereinfacht, da eine Herstellungsanlage nur mit einer Materialbahn aus unvulkanisiertem Gummi beladen werden muss.

Durch das Auflegen können die Materialstücke miteinander verbunden werden, wenn diese ausreichend klebende Kontaktoberflächen aufweisen. Das erste Materialstück und das zweite Materialstück können aber auch zusätzlich verbunden bzw. laminiert werden, um einen Materialstreifen mit integrierter elektronischer Komponente zu erhalten.

Die elektronische Komponente weist bevorzugt einen Speicher und mindestens eine Antenne auf, wobei die (mindestens eine) Antenne zum Informationsaustausch zum Beschreiben und/oder zum Auslesen des Speichers sowie gegebenenfalls zur Energieversorgung dienen kann. Insbesondere ist die elektronische Komponente bevorzugt ein RFID-Chip mit mindestens einer Antenne. Das erste Materialstück und das zweite Materialstück bestehen vorzugsweise aus unvulkanisiertem Gummi.

Das Verbinden der Materialstücke mit dazwischen angeordneter elektronischer Komponente erfolgt vorzugsweise durch Druckeinwirkung, insbesondere durch Laminieren. Danach können die sukzessive hergestellten Materialstücke auf ein einseitig klebendes Band bzw. auf eine Trägerbahn aufgelegt werden, welches dann zu einer Rolle aufgewickelt wird. Auf diese Weise können die Materialstücke bei der Reifenherstellung - beispielsweise in einem anderen Werk - auf automatisierte Weise wieder von der Rolle abgegriffen werden.

Im Sinne der Erfindung ist der Materialstreifen allgemein bevorzugt zur Verbindung mit einem Gummi für eine Reifenherstellung ausgebildet.

Ein erfindungsgemäßes Verfahren zur Herstellung eines Materialstreifens umfasst ganz allgemein bevorzugt den abschließenden Schritt, dass der hergestellte Materialstreifen mit einem Gummi zur Herstellung eines Reifens verbunden wird.

### Kurzbeschreibung der Figuren

- Fig. 1: zeigt eine Vorrichtung mit einer Schneidevorrichtung und einer Vorrichtung zum Aufbringen einer elektronischen Komponente auf die Materialbahn nach einem Ausführungsbeispiel der vorliegenden Erfindung;
- Fig. 2: zeigt eine Schneidevorrichtung und eine Vorrichtung zum Anheben eines Materialstückes nach einem Ausführungsbeispiel der vorliegenden Erfindung;
- Fig. 3: zeigt Vorrichtungen nach einem Ausführungsbeispiel der vorliegenden Erfindung, die nach bzw. stromabwärts von der Schneidevorrichtung angeordnet sind;
- Fig. 4: zeigt eine Vorrichtung zum Aufwickeln der Materialstreifen mit integrierter elektronischer Komponente auf eine einseitig klebende Transportbahn bzw. auf eine Trägerbahn nach einem Ausführungsbeispiel der vorliegenden Erfindung;
- Fig. 5: zeigt eine Draufsicht eines Materialstreifens mit integrierter elektronischer Komponente nach einem Ausführungsbeispiel der vorliegenden Erfindung.

### Detaillierte Beschreibung eines Ausführungsbeispiels

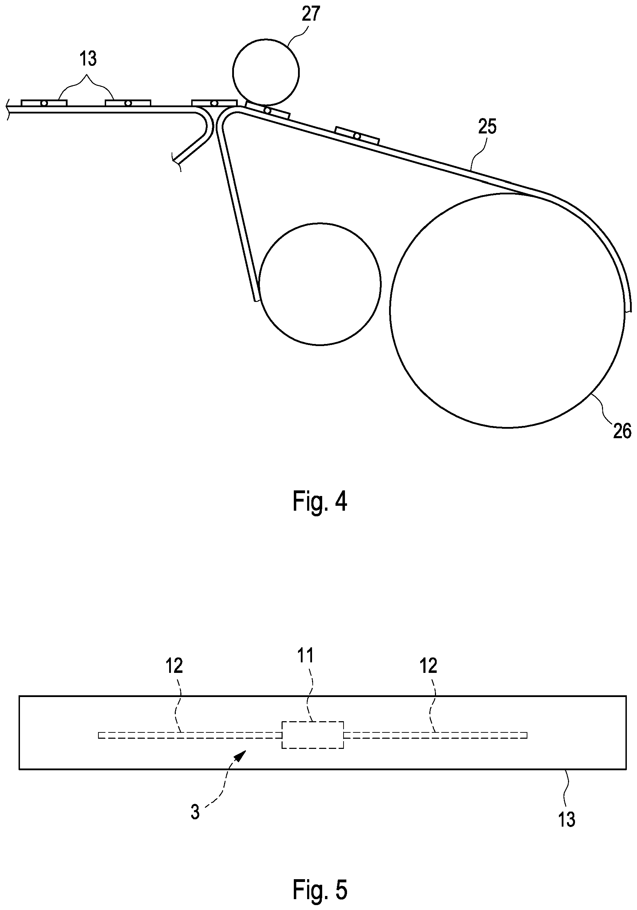

Fig. 5 zeigt eine Draufsicht eines Materialstreifens 13 mit integrierter elektronischer Komponente 3 nach einem Ausführungsbeispiel der vorliegenden Erfindung. Da die elektronische Komponente 3 zwischen zwei Materialstücken angeordnet ist, ist sie von außen nicht sichtbar. In Figur 5 ist die Darstellung der elektronischen Komponente 3 also nur als eine Darstellung ihrer Position innerhalb des Materialstreifens 13 anzusehen.

Eine elektronische Komponente 3 nach der vorliegenden Erfindung weist bevorzugt einen Speicher und mindestens eine Antenne 12 auf, wobei die Antenne bzw. die Antennen zum Informationsaustausch zum Beschreiben und/oder zum Auslesen des Speichers sowie gegebenenfalls zur Energieversorgung dienen kann. Insbesondere ist die elektronische Komponente bevorzugt ein RFID-Chip 11 mit zwei Antennen 12 (siehe Fig. 5).

Der Materialstreifen mit integrierter elektronischer Komponente kann eine Länge von beispielsweise 30 bis 150 mm, insbesondere von 50 bis 120 mm, weiter bevorzugt von 50 bis 70 mm aufweisen. Die Breite beträgt beispielsweise 3 bis 50 mm, insbesondere 5 bis 20 mm, weiter bevorzugt 8 bis 12 mm. Die Höhe beträgt beispielsweise 0,3 bis 4 mm, insbesondere 0,5 bis 1 mm, weiter bevorzugt 0,6 bis 0,8 mm.

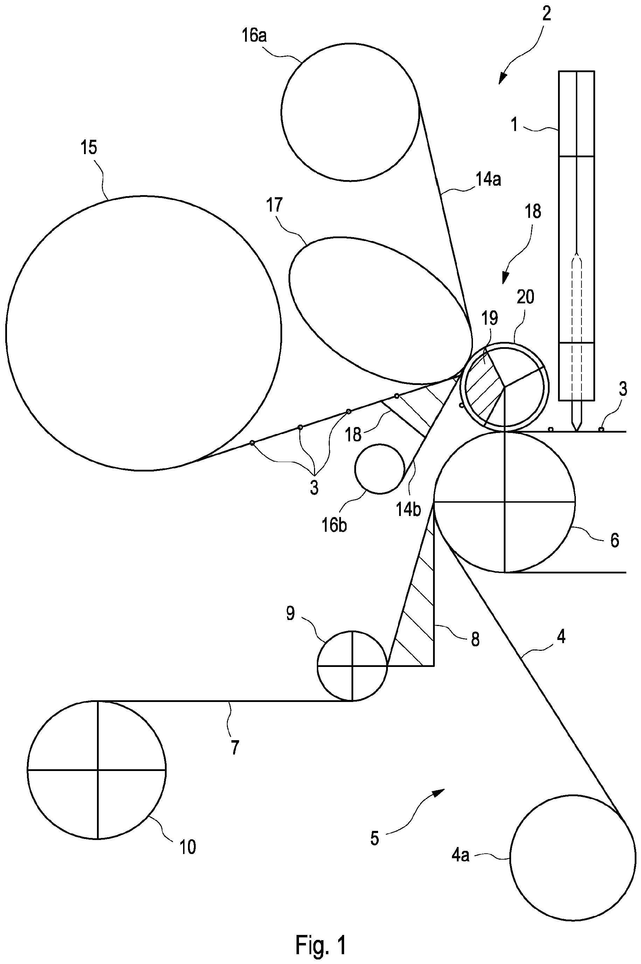

Fig. 1 zeigt eine Vorrichtung mit einer Schneidevorrichtung 1 und einer Vorrichtung 2 zum Aufbringen einer elektronischen Komponente 3 auf eine Materialbahn 4 nach einem Ausführungsbeispiel der vorliegenden Erfindung. Die Materialbahn 4 besteht aus unvulkanisiertem Gummi.

Die Materialbahn 4 wird von einer Vorrichtung 5 zum Zuführen der Materialbahn zugeführt. Die Materialbahn 4 ist dabei zunächst auf einer Rolle 4a aufgewickelt und durch die Zuführvorrichtung abgewickelt und über eine vorzugsweise angetriebene Umlenkrolle bzw. Förderer 6 der Schneidevorrichtung 1 zugeführt.

Die Materialbahn 4 ist zunächst mit einer Zwischenfolie bzw. einem Schutzmaterial 7 bedeckt. Dieses Schutzmaterial 7 wird im Bereich der Umlenkrolle 6 beispielsweise um ein Umlenkblech oder um einen Keil 8 abgelenkt, um das Schutzmaterial 7 von der Materialbahn 4 abzuziehen. Das Schutzmaterial 7 kann dann über eine weitere Umlenkrolle 9 umgelenkt und über eine Rolle 10 aufgewickelt werden.

Die einzelnen elektronischen Komponenten 3 sind zunächst zwischen einem Blistergurt 14a und einer Blisterfolie 14b angeordnet, welche auf einer Rolle 15 aufgewickelt sind. Der Blistergurt 14a und die Blisterfolie, 14b werden mit den elektronischen Komponenten 3 von der Rolle 15 abgewickelt. Der Blistergurt 14a wird dann von einer Rolle 16a aufgewickelt, und die Blisterfolie 14b wird von einer Rolle 16b aufgewickelt. Die Blisterfolie 14b wird dabei durch ein Umlenkblech oder einen Keil 18 umgelenkt, und der Blistergurt 14a wird durch ein Andrückelement 17 umgelenkt. Das Andrückelement 17 ist länglich ausgestaltet mit einem vorzugsweise runden oder ovalen Querschnitt.

Obwohl die elektronischen Komponenten 3 im dargestellten Ausführungsbeispiel auf einer Rolle aufgewickelt sind, können sie erfindungsgemäß auch auf Blisterplatten zugeführt werden.

Das Andrückelement 17 grenzt an einen Übergabemechanismus 18 an. Die einzelnen elektronischen Komponenten werden von diesem Bereich (in dem der Blistergurt 14a und die Blisterfolie 14b voneinander getrennt werden) an die Materialbahn 4 übergeben. Der Übergabemechanismus 18 hat hierzu vorzugsweise eine drehbare Rolle 20 und einen innerhalb der Rolle 20 angeordneten, feststehenden magnetischen Bereich 19. Eine elektronische Komponente wird durch die magnetische Kraft an der Rolle 20 gehalten und anschließend automatisch freigegeben, um auf der Materialbahn 4 liegen zu bleiben.

Anstelle des oben beschriebenen Übergabemechanismus 18 kann dieser auch mit einem teilmagnetischen Riemen (anstelle einer teilmagnetischen Rolle) oder als Mechanismus mit einem Greifsystem ausgestaltet sein.

Die Materialbahn 4 wird anschließend von der Schneidevorrichtung 1 in einzelne Materialstücke geschnitten. Diese Schneidevorrichtung kann auf vielfältige Weise ausgestalten sein, beispielsweise mit einem durchgehenden Messer (z.B. ein Stanzmesser oder ein Guillotinenmesser), das von oben nach unten bewegt wird, mit einem Rollmesser, das quer zur Materialbahn bewegt wird, oder einem Messer, das sich auf einer rotierenden Rolle befindet (sogenannter Cross-Cutter).

Die Schneidevorrichtung wird von einer (nicht dargestellten) Steuerungseinrichtung derart angesteuert, dass abwechselnd ein erstes Materialstück 21a abgeschnitten wird, auf dem sich keine elektronische Komponente 3 befindet, und dann ein zweites Materialstück 21b abgeschnitten wird, auf dem sich eine elektronische Komponente 3 befindet.

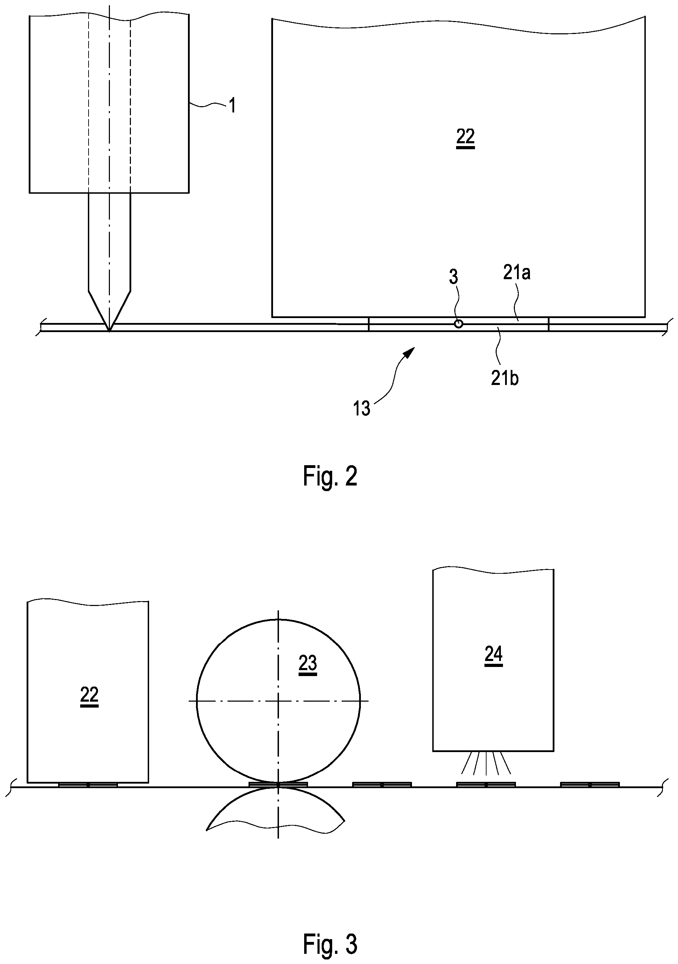

Fig. 2 zeigt eine Schneidevorrichtung 1 und eine Vorrichtung 22 zum Anheben eines Materialstückes nach einem Ausführungsbeispiel der vorliegenden Erfindung. Die Vorrichtung 22 hebt das erste Materialstück 21a (ohne elektronische Komponente) an, so dass das zweite Materialstück 21b mit elektronischer Komponente unter dem ersten Materialstück angeordnet werden kann. Anschließend wird das erste Materialstück 21a wieder abgesenkt, damit die elektronische Komponente 3 zwischen den beiden Materialstücken 21a, 21b angeordnet bzw. aufgenommen ist. Die Vorrichtung 22 kann hierzu entweder einen mechanischen Greifer oder einen Vakuumgreifer aufweisen.

Fig. 3 zeigt Vorrichtungen nach einem Ausführungsbeispiel der vorliegenden Erfindung, die nach bzw. stromabwärts von der Schneidevorrichtung angeordnet sind. Nach der Vorrichtung 22 zum Anheben eines Materialstückes sind zwei Walzen einer Vorrichtung 23 zum Verbinden der zwei Materialstücke, um einen Materialstreifen 13 mit integrierter elektronischer Komponente zu erhalten, angeordnet. Diese Vorrichtung 23 ist vorzugsweise eine Laminiervorrichtung, so dass die Materialstücke mit dazwischen angeordneter elektronischer Komponente durch Druckeinwirkung miteinander verbunden werden.

Weiter kann eine Vorrichtung 24 vorgesehen sein, um Informationen an die elektronische Komponente 3 zu übertragen (genauer: über die mindestens eine Antenne 12 an den Speicher der elektronischen Komponente) und/oder um die Funktion der elektronischen Komponente 3 zu testen. Dabei kann auch eine Inspektionsvorrichtung vorgesehen sein zur Qualitätsprüfung des Materialstreifens bzw. des RFID-Tags 13 und eine Ausschleusevorrichtung, um fehlerhafte Materialstreifen bzw. RFID-Tags 13 abzusondern.

Fig. 4 zeigt eine Vorrichtung zum Aufwickeln der Materialstreifen (13) mit integrierter elektronischer Komponente auf eine einseitig klebende Transportbahn bzw. eine Trägerbahn 25 nach einem Ausführungsbeispiel der vorliegenden Erfindung. Die Materialstreifen bzw. die RFID-Tags werden über eine Rolle 27 auf Trägerbahn aufgedrückt. Anschließend wird die Trägerbahn 25 mitsamt den Materialstreifen 13 bzw. den RFID-Tags auf eine Rolle 26 aufgewickelt, um - gegebenenfalls nach einem Transport - anschließend leicht auf automatisierte Weise im Reifenwerk wieder zugeführt werden zu können.

Im Reifenwerk wird ein Materialstreifen 13 mit integrierter elektronischer Komponente 3 mit dem Gummi für die Reifenherstellung verbunden und gemeinsam vulkanisiert, so dass die elektronische Komponente schlussendlich im Reifen integriert ist.

Obwohl im oben erläuterten Ausführungsbeispiel die elektronischen Komponenten 3 vor der Schneidevorrichtung auf die Materialbahn 4 aufgebracht wird, ist es auch möglich, eine elektronische Komponente 3 nach der Schneidevorrichtung auf ein bereits abgeschnittenes Materialstück 21a, 21b aufzubringen.

Außerdem ist es nach der vorliegenden Erfindung möglich, die elektronische Komponente auf das erste Materialstück 21a aufzubringen (anstelle des zweiten Materialstückes) bzw. auf den Teil der Materialbahn 4, welches dann als erstes Materialstück 21a abgeschnitten wird, und dann das zweite Materialstück 21b auf das erste Materialstück 21a aufzubringen.

## Patentansprüche

1. Verfahren zur Herstellung eines Materialstreifens (13) mit integrierter elektronischer Komponente (3), umfassend die folgenden Schritte:
Zuführen einer Materialbahn (4), die zunächst auf einer Rolle (4a) aufgewickelt ist und durch eine Zuführvorrichtung (5) abgewickelt wird,
Abschneiden eines ersten Materialstückes (21a) von der Materialbahn (4),
Abschneiden eines zweiten Materialstückes (21b) von derselben Materialbahn (4),
Auflegen einer elektronischen Komponente (3) auf das erste Materialstück (21a) oder auf das zweite Materialstück (21b),
Auflegen des zweiten Materialstückes (21b) auf das erste Materialstück (21a) bzw. des ersten Materialstückes (21a) auf das zweite Materialstück (21b), so dass die elektronische Komponente (3) zwischen dem ersten Materialstück (21a) und dem zweiten Materialstück (21b) aufgenommen ist,
wobei das erste Materialstück (21a) und das zweite Materialstück (21b) unvulkanisiertes Gummi aufweisen oder aus unvulkanisiertem Gummi bestehen.

2. Verfahren nach Anspruch 1, wobei das Abschneiden des ersten Materialstückes (21a) und das Abschneiden des zweiten Materialstückes (21b) gleichzeitig erfolgen.

3. Verfahren nach Anspruch 1 oder 2, weiter umfassend den Schritt des Verbindens des ersten Materialstückes (21a) mit dem zweiten Materialstück (21b), um einen Materialstreifen (13) mit integrierter elektronischer Komponente (3) zu erhalten.

4. Verfahren nach einem der vorhergehenden Ansprüche, wobei das Abschneiden des zweiten Materialstückes (21b) erfolgt, nachdem das erste Materialstück (21a) abgeschnitten wurde.

5. Verfahren nach einem der vorhergehenden Ansprüche, wobei das Verbinden des ersten Materialstückes (21a) mit dem zweiten Materialstück (21b) unter Druckeinwirkung, insbesondere durch Laminieren erfolgt.

6. Verfahren nach einem der vorhergehenden Ansprüche, wobei die elektronische Komponente (3) einen Speicher und mindestens eine Antenne aufweist und insbesondere ein RFID-Chip ist.

7. Verfahren nach einem der vorhergehenden Ansprüche, wobei der Materialstreifen (13) mit integrierter elektronischer Komponente (3) eine Länge von 30 bis 150 mm, eine Breite von 3 bis 50 mm und eine Höhe von 0,3 bis 4 mm aufweist.

8. Verfahren nach einem der vorhergehenden Ansprüche, wobei der hergestellte Materialstreifen mit einem Gummi zur Herstellung eines Reifens verbunden wird.

## Claims

1. Method for producing a material strip (13) having an integrated electronic component (3), said method comprising the following steps:
feeding a material web (4) which is first wound on a roll (4a) and unwound by a feeding device (5);
cutting off a first material piece (21a) from the material web (4);
cutting off a second material piece (21b) from the same material web (4);
placing an electronic component (3) onto the first material piece (21a) or onto the second material piece (21b);
placing the second material piece (21b) onto the first material piece (21a), or the first material piece (21a) onto the second material piece (21b) in such a way that the electronic component (3) is received between the first material piece (21a) and the second material piece (21b);
wherein the first material piece (21a) and the second material piece (21b) comprise non-vulcanized rubber or are composed of non-vulcanized rubber.

2. Method according to Claim 1, wherein the cutting-off of the first material piece (21a) and the cutting-off of the second material piece (21b) take place simultaneously.

3. Method according to Claim 1 or 2, furthermore comprising the step of connecting the first material piece (21a) to the second material piece (21b) so as to obtain a material strip (13) having an integrated electronic component (3).

4. Method according to one of the preceding claims, wherein the cutting off of the second material piece (21b) takes place once the first material piece (21a) has been cut off.

5. Method according to one of the preceding claims, wherein the connecting of the first material piece (21a) to the second material piece (21b) takes place under the influence of pressure, in particular by laminating.

6. Method according to one of the preceding claims, wherein the electronic component (3) has a memory and at least one antenna, and is in particular an RFID chip.

7. Method according to one of the preceding claims, wherein the material strip (13) having the integrated electronic component (3) has a length of 30 to 150 mm, a width of 3 to 50 mm, and a height of 0.3 to 4 mm.

8. Method according to one of the preceding claims, wherein the material strip produced is connected to a rubber for producing a tyre.

## Revendications

1. Procédé de fabrication d'une bande de matière (13) pourvue d'un composant électronique (3) intégré, comprenant les étapes suivantes :
amenée d'une bande de matière (4) qui est tout d'abord enroulée sur une bobine (4a) et qui est déroulée par un dispositif d'amenée (5),
découpe d'un premier morceau de matière (21a) de la bande de matière (4),
découpe d'un deuxième morceau de matière (21b) de la même bande de matière (4),
dépose d'un composant électronique (3) sur le premier morceau de matière (21a) ou sur le deuxième morceau de matière (21b),
dépose du deuxième morceau de matière (21b) sur le premier morceau de matière (21a) ou du premier morceau de matière (21a) sur le deuxième morceau de matière (21b), de sorte que le composant électronique (3) est accueilli entre le premier morceau de matière (21a) et le deuxième morceau de matière (21b),
le premier morceau de matière (21a) et le deuxième morceau de matière (21b) présentant du caoutchouc non vulcanisé ou étant constitués de caoutchouc non vulcanisé.

2. Procédé selon la revendication 1, la découpe du premier morceau de matière (21a) et la découpe du deuxième morceau de matière (21b) étant effectuées simultanément.

3. Procédé selon la revendication 1 ou 2, comprenant en outre l'étape d'assemblage du premier morceau de matière (21a) avec le deuxième morceau de matière (21b) afin d'obtenir une bande de matière (13) pourvue d'un composant électronique (3) intégré.

4. Procédé selon l'une des revendications précédentes, la découpe du deuxième morceau de matière (21b) étant effectuée après avoir découpé le premier morceau de matière (21a).

5. Procédé selon l'une des revendications précédentes, l'assemblage du premier morceau de matière (21a) avec le deuxième morceau de matière (21b) étant réalisé sous l'effet d'une pression, notamment par laminage.

6. Procédé selon l'une des revendications précédentes, le composant électronique (3) possédant une mémoire et au moins une antenne et étant notamment une puce RFID.

7. Procédé selon l'une des revendications précédentes, la bande de matière (13) pourvue d'un composant électronique (3) intégré présentant une longueur de 30 à 150 mm, une largeur de 3 à 50 mm et une hauteur de 0,3 à 4 mm.

8. Procédé selon l'une des revendications précédentes, la bande de matière fabriquée étant assemblée avec un caoutchouc en vue de la fabrication d'un pneu.
